# DEMANDE DE BREVET EUROPEEN

(11) **EP 1 650 710 A1**
(43) Date de publication de la demande: **26.04.2006**
(21) Numéro de dépôt: 04292513.1
(22) Date de dépôt: 22.10.2004
(51) Int. Cl.: G06T 7/00

(54) **Traitement d'image identifiant des fibroses dans un tissu organique**

(71) Demandeur: INSTITUT PASTEUR, 75015 Paris (FR)
(72) Inventeur: Olivo-Marin, Jean-Christophe, 92320 Sceaux (FR); Meas- Yedid, Vannery, 92320 Chatillon (FR); Morelon, Emmanuel, 75017 Paris (FR); Brousse, Nicole, 75017 Paris (FR); Landais, Paul, 92200 Neuilly sur Seine (FR); Kreis, Henri, 75006 Paris (FR)
(74) Mandataire: Warcoin, Jacques

(57) **Abrégé**

L'invention concerne un procédé de traitement d'image permettant d'identifier des fibroses dans un tissu organique, à partir d'une image du tissu, le tissu ayant été préalablement coloré, caractérisé en ce qu'il comprend les étapes suivantes :
(a) masquage dans l'image des couleurs autres que la couleur associée aux fibroses ;
(b) masquage de régions de couleur associées à des artéfacts et ayant au moins une caractéristique d'image sensiblement différente des caractéristiques d'image associées aux fibroses, le masquage utilisant alors cette au moins une caractéristique d'image comme critère de masquage.

En outre l'invention concerne un procédé d'imagerie médicale incluant ledit procédé de traitement d'image, un programme d'ordinateur mettant en oeuvre le procédé de traitement d'image, ainsi que des utilisations pour diagnostic médical.

## Description

L'invention a trait à un procédé d'imagerie médicale et de traitement d'image permettant d'identifier des fibroses dans un tissu organique, à partir d'une image du même tissu organique ayant été colorée.

La quantification, dans des tissus organiques, de fibrose peut en particulier aider au diagnostic pré-clinique d'altérations fonctionnelles au niveau des tissus et des organes.

En particulier, une observation de biopsies colorées prélevées à intervalles réguliers permet d'évaluer l'augmentation de la fibrose.

Ainsi, la néphropathie chronique de l'allogreffe (CAN) peut être diagnostiquée de manière précoce, avant l'apparition des symptômes cliniques, par l'observation de modifications histopathologiques telles que l'apparition de fibrose interstitielle. On trouvera ainsi par exemple des applications dans le diagnostic du rein transplanté.

On pourra aussi trouver des applications pour le foie infecté par l'hépatite B, dans lequel l'observation de fibrose hépatique peut constituer un tel diagnostic pré-clinique.

Une méthode de quantification, dans des tissus organiques, de fibrose peut en outre trouver des applications dans les médicaments anti-fibrosants, anti-viraux, immunosuppresseurs.

Pour révéler et distinguer les constituants biologiques naturellement translucides, les biopsies faites sur un organe déterminé (rein, foie, poumon,...) sont ensuite marquées par des colorants histochimiques.

Par exemple, l'application de trichrome de Masson à la biopsie permet de distinguer la partie de la biopsie contenant des fibroses interstitielles (de couleur verte) du reste de la biopsie (globalement de couleur magenta).

Habituellement, ce sont les biologistes qui quantifient visuellement les données en observant les images au microscope.

Cette procédure est une tache répétitive, laborieuse et souvent peu reproductible. En effet, lorsqu'il s'agit notamment d'estimer une surface ou une intensité moyenne, les résultats deviennent approximatifs.

Afin de permettre des analyses statistiques sur les données recueillies, il est donc nécessaire de mettre au point une méthode objective, fiable, reproductible et exploitable dans une pratique de routine, qui permette alors de minimiser l'intervention du biologiste.

Une quantification aussi automatique que possible de la fibrose est donc nécessaire, même si des difficultés d'une telle mise en oeuvre existent, notamment le fait que les couleurs de l'image peuvent varier en fonction de divers facteurs comme la coloration de la biopsie elle-même, l'épaisseur de la coupe, la vieillesse de la lame, et les paramètres d'acquisition de l'image.

Parmi les approches qui ont été développées et adaptées aux images de microscopie couleur, on peut citer des méthodes de segmentation en noir et blanc qui permettent une partition d'une image en différentes zones représentant chacune un objet caractéristique.

Un premier objectif de l'invention est de prévoir un procédé d'imagerie médicale et de traitement d'image permettant d'identifier automatiquement ou semi-automatiquement la quantité de fibrose dans une biopsie.

Un deuxième objectif de l'invention est de mettre en oeuvre un tel procédé d'imagerie médicale de manière objective, reproductible et fiable, exploitable dans une pratique de routine.

Un troisième objectif de l'invention est de fournir en sortie des données sur les fibroses permettant de diagnostiquer les risques de maladies potentielles telle que la néphropathie chronique ou l'hépatite.

La présente invention tend à résoudre ce problème en proposant, selon un premier aspect, un procédé de traitement d'image permettant d'identifier des fibroses dans un tissu organique selon la revendication 1.

D'autres caractéristiques possibles de ce procédé de traitement d'image sont déclinées dans les revendications 2 à 24.

Selon un deuxième aspect, l'invention propose un programme d'ordinateur comprenant des lignes de codes aptes à mettre en oeuvre le procédé de traitement d'image selon l'une des revendications 1 à 24, lorsqu'il est exécuté par un système informatique mis en oeuvre ou non sur un support lisible.

Selon un troisième aspect, l'invention propose un support d'informations, totalement ou partiellement amovible, lisible par un système informatique, caractérisé en ce qu'il stocke des instructions d'un programme d'ordinateur aptes à mettre en oeuvre le procédé de traitement d'image selon l'une des revendications 1 à 24.

Selon un quatrième aspect, l'invention propose un procédé d'imagerie médicale selon l'une des revendications 28 à 32.

Selon un cinquième aspecte, l'invention propose un système d'imagerie médicale selon la revendication 33 ou 34.

Selon un sixième aspect, l'invention propose des utilisations des données sur la fibrose fournies en sortie du procédé d'imagerie à un diagnostic médical selon l'une des revendications 35 à 37.

D'autres caractéristiques, buts et avantages de l'invention ressortiront de la description qui suit, qui est purement illustrative et non limitative, et qui sera lue en regard des dessins annexés sur lesquels :
La figure 1 est un organigramme représentant de façon schématique les principales étapes d'un procédé globale d'analyse d'image selon l'invention.
La figure 2 est un organigramme représentant de façon schématique une étape particulière pour masquer des couleurs selon l'invention.
La figure 3 est un organigramme représentant de façon schématique une étape particulière pour masquer des artéfacts de fibrose selon l'invention.
Les figures 4a à 4f sont des images numériques (obtenues après grossissement 4 fois au microscope) d'une première biopsie rénale, représentant les différentes étapes de masquage d'éléments de l'image d'un procédé selon l'invention.
Les figures 5a à 5c sont des images numériques (obtenues après grossissement 4 fois au microscope) d'une deuxième biopsie rénale, représentant les différentes étapes de masquage d'éléments de l'image d'un procédé selon l'invention.
Les figures 6 et 7 sont deux images (ou photos) numériques (obtenues après grossissement 4 fois au microscope) respectivement d'une troisième et d'une quatrième biopsie rénale.

Le tissu organique à analyser selon l'invention a été par exemple prélevé de n'importe quel organe humain ou animal, tel qu'un rein, un foie ou un poumon. Dans le cas d'un prélèvement, on parle alors plus couramment de « biopsie » (à la place de « tissu organique»).

Les biopsies peuvent être faites au pistolet, avec par exemple une aiguille à 16G ou 18G. La biopsie pourra alors être fixée au paraformaldéhyde, puis incluse en paraffine. Elle peut enfin être coupée en sections (typiquement de quelques microns), avant de déposer chaque section sur un support tel qu'une lame.

Pour ne conserver que la biopsie (suppression des taches, bruit de l'image), on préférera ne retenir que la plus grande région connexe obtenue. Ceci suppose que la section de la biopsie à analyser n'a pas été endommagée et est constituée d'une seule composante.

En particulier, une biopsie de rein transplanté pourra être analysée, par exemple la partie corticale du rein.

Un but de l'invention est de détecter et d'éventuellement quantifier la présence de fibrose dans ce tissu.

En particulier, un calcul d'un index de la fibrose interstitielle d'une biopsie rénale pourra être mis en oeuvre, pour par exemple détecter des symptômes de néphropathie chronique de l'allogreffe (CAN), l'index étant défini par le rapport de la surface de fibrose interstitielle sur la surface de la biopsie.

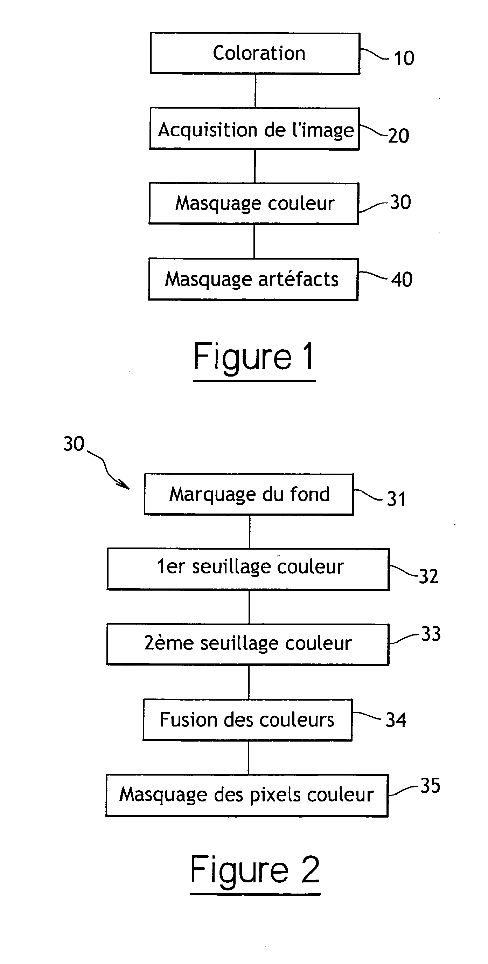

En référence à la figure 1, une première étape 10 selon l'invention consiste à coloriser la biopsie (qui est typiquement transparente) au moyen de produit de colorisation histochimique. Ce(s) produit(s) de colorisation est (sont) choisi(s) de sorte à pouvoir révéler et distinguer différentes parties de la biopsie par des couleurs susceptibles d'être détectées par les moyens d'acquisition de l'image utilisés.

En particulier, la biopsie peut être marquée au trichrome de Masson, conformément à l'exemple étudié ci-après, le trichrome de Masson étant un produit adapté pour colorer en vert la partie de la biopsie incluant des fibroses, contrairement à d'autres parties du tissu qui apparaissent typiquement en magenta (avec éventuellement un peu de bleu pour les vaisseaux sanguins et quelques tâches rouges).

Une deuxième étape 20 consiste à acquérir l'image de la biopsie par des moyens d'acquisition adaptés, comprenant un microscope, tel qu'un microscope à transmission, autorisant un grossissement déterminé de la biopsie.

Avantageusement, un détecteur CCD (tel qu'une caméra CCD) est monté sur le microscope pour récupérer les données en aval de celui-ci. Contrairement aux images naturelles, les images recueillies par un tel dispositif (microscope - détecteur CCD) ne comportent pas de phénomène d'ombrage difficile à appréhender pour mesurer la qualité de la segmentation, une région pouvant en effet contenir des transitions de couleur dues à la variation de l'illumination.

Le détecteur CCD permet notamment de numériser l'image, qui peut alors être exploitée par un système de traitement de l'image tel qu'une unité centrale d'ordinateur comprenant un processeur et un support d'informations (totalement ou partiellement amovible), lisible par le processeur (tel qu'une mémoire) pour stocker les données et les programmes d'ordinateur utilisés. Bien sûr, un terminal de type écran, et des interfaces utilisateurs (souris, clavier,...) muniront avantageusement ce système de traitement de l'image pour permettre une interaction entre les données et le biologiste.

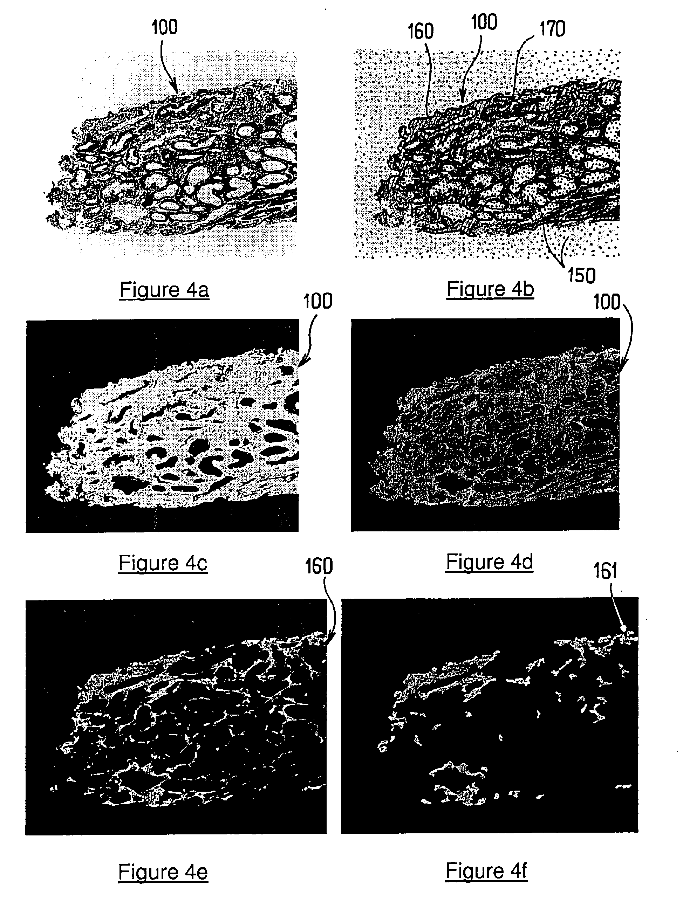

En référence à la figure 4a, une image d'une biopsie rénale 100 marquée au trichrome de Masson y est présentée, telle qu'elle a pu être observée par le Demandeur sur un écran d'ordinateur en sortie d'un détecteur CCD. L'image est en fond clair, la biopsie 100 apparaît alors plus sombre que le fond de la lame.

En référence à la figure 4b, la même image y est représentée avec, cette fois-ci, une indication des régions de l'image pouvant être distinguées à l'oeil nu. Les régions 150 contenant des points représentent quelques unes des régions du fond de l'image (typiquement des régions ayant la lumière provenant directement de la lame), dont la lumière est plus intense que le reste de l'image (la biopsie). Les régions 160 en hachures représentent quelques unes des régions de couleur verte de l'image. Les régions 170 sont en rouge magenta.

Une troisième étape 30 du procédé selon l'invention consiste alors à extraire de l'image toutes les régions 150 (de couleur verte) correspondant à des localisations cellulaires qui ont des caractéristiques de fibrose, en masquant les autres couleurs de l'image.

En référence à la figure 2, un exemple d'une mise en oeuvre automatique d'une telle étape 130 de masquage de couleur, y est représenté.

Une première opération 131 consiste à masquer le fond de l'image.

A cet effet, un seuillage automatique sur la composante intensité pourra être mis en oeuvre, prenant en compte le fait que le fond a une lumière plus intense que le reste de l'image, notamment si on a utilisé un microscope à transmission. On pourra ainsi par exemple rendre l'image en noir et blanc, et retirer alors toutes les parties dont l'intensité lumineuse est supérieure à une valeur limite fixée manuellement ou préalablement paramétrée.

On obtient alors l'image de la figure 4d, dans laquelle ont été retirées les composantes de lumière. Cette image représente uniquement la biopsie 100. On pourra notamment remarquer que les lumières des tubules, qui auraient pu gêner les prochaines analyses, ont été supprimées.

Eventuellement, on pourra, postérieurement à cette première opération 131, et avant d'engager toute autre opération, réaliser une analyse connexe sur l'image ainsi seuillée en intensité puis calculer l'aire de chaque région, et enfin identifier la région ayant la plus grande surface (ces analyses pouvant être illustrées par l'image représentée de la figure 4c, dans laquelle la biopsie apparaît sans nuance de couleur, permettant ainsi de réaliser ces analyses sans tenir compte des couleurs). On enlèvera ainsi les surfaces internes « vides » correspondantes aux tubules.

Les prochaines opérations de cette étape 30 du masquage couleur, consistent à ne conserver de la biopsie que les régions 160 ayant la couleur verte.

A cet effet, la technique avantageusement employée selon l'invention est une technique de segmentation couleur. Une segmentation couleur se fait nécessairement dans un espace couleur à N dimensions (N>1).

Il existe de nombreuses méthodes de segmentation d'images couleur ainsi que plusieurs modèles d'espace couleur. Le choix de la méthode et de l'espace couleur est effectué pour permettre une pratique de routine de la quantification des données issues des images couleur biologiques, en minimisant l'intervention de l'utilisateur biologiste.

Il existe de nombreux espaces couleur (plus de 15) ainsi que de nombreuses méthodes de segmentation.

On pourra choisir l'espace couleur RVB (Rouge-Vert-Bleu) qui est le plus couramment employé, dans lequel les composantes rouge, verte et bleue sont représentées dans un espace cartésien orthogonal. Il répond à la théorie trichromatique selon laquelle toute couleur peut être reproduite à partir de trois couleurs primaires qui respectent certaines caractéristiques. Il est également en accord avec le système visuel humain qui perçoit les couleurs au moyen de trois filtres passe-bandes sensibles approximativement aux longueurs d'onde rouges, vertes et bleues.

On pourra en variante choisir un espace couleur HSI (pour « Hue » en anglais ou « Teinte » en français, « Saturation » et « Intensité »), qui mime d'avantage que l'espace RVB les processus de plus haut niveau qui existent dans le système visuel humain. La représentation d'un tel espace HSI est obtenue par des combinaisons non linéaires des composantes R,V,B, où la couleur est représentée en terme de teinte (H), de saturation (S) c'est-à-dire la pureté de la couleur, et d'intensité (I) qui est une valeur relative à la quantité de lumière. Ces composantes de teinte, saturation et intensité (H,S,I) sont des notions beaucoup plus intuitives. Ces composantes sont représentées dans un système de coordonnées cylindriques. L'espace HSB est une variante de la représentation HSI, où B (« Brightness ») exprime la luminosité.

On pourra choisir un espace couleur *Luv* ou *Lab,* qui ont des représentations perceptuellement plus uniformes que *RVB* et *HSI* (cela signifiant que des différences perçues par i'oeii humain comme étant de même proportion ne sont pas traduites par des distances euclidiennes équivalentes dans les espaces RVB ou *HSI).*

De manière non limitative, un espace couleur qui tient compte de la manière dont l'information couleur est transmise au cerveau humain, pourra cependant être préféré. Selon le modèle physiologique du système visuel humain, deux signaux contiennent l'information chromatique et un signal porte l'information achromatique (noir-blanc).

On pourra ainsi choisir un espace *H*_{*1*}*H*_{*2*}*H*_{*3*} se calculant par combinaisons linéaires de R,V,B *(H*_{*1*}*=R-V, H*₂=*2B-R-V* et *H*_{*3*}=(R+V+B)/3) ou un des espaces *YIQ, YUV et* YC_{b}Cᵣ (pour plus de détails sur ces trois derniers espaces, voir par exemple « The Colour Image Processing Handbook » de S.J. Sangwine et R.N.E. Horne, *Chapman &* Hall, 1998). L'espace d'Otha (*l*_{*1*}*l*_{*2*}*l*_{*3*}) peut aussi éventuellement être choisi, celui-ci ayant la particularité d'avoir des axes chromatiques 1% et 1% décorrélés car déterminés par la transformée de Karhunen-Loeve (voir par exemple «Color information for région segmentation » de Y. Otha et al., *IEEE Computer Graphics and Image Processing,* 13 :222-241, 1980). Dans cette diversité de représentations, il n'existe pas vraiment de meilleur modèle d'espace couleur dans l'absolu. Le choix dépend généralement de l'application et du but à atteindre.

Selon des simulations réalisées par la Demanderesse, les espaces *Luv* et *H*_{*i*}*H*_{*2*}*H*_{*3*} seraient particulièrement adaptés pour une segmentation en trois couleurs.

L'espace *H*_{*1*}*H*_{*2*}*H*_{*3*} pourra cependant être préféré dans le cadre de l'invention, notamment du fait de sa plus grande simplicité de mise en oeuvre, induisant moins de calculs, par rapport à l'espace *Luv.*

En ce qui concerne le choix de la technique de segmentation couleur pour extraire le masque de vert, il doit être fait de sorte que la segmentation puisse fonctionner quelles que soient les biopsies prélevées. En effet, des variations de couleur apparaissent nécessairement entre différentes biopsies. Ces variations de couleur sont notamment attribuées à des facteurs liés à l'unicité d'une biopsie par rapport à une autre. Ces facteurs pouvant être des différences dans l'épaisseur de la coupe, des colorations variables dues à des marquages légèrement différents, des variations dans les paramètres d'acquisition de l'image, etc.

Cette segmentation couleur, pour extraire le masque de vert, doit dont être choisie suffisamment robuste pour s'affranchir de ces variations de couleur un peu aléatoires d'une biopsie à une autre.

La segmentation choisie peut ainsi par exemple être l'une de celles listées dans les documents suivants : « A review on image segmentation techniques » de N. Pal et S. Pal *(Pattern Récognition,* 26(9) :1277-1294, 1993) ; « Color image segmentation : A state-of-the-art survey » de L. Lucchese et S.K. Mitra *(Proc. of the Indian National Science Academy (INSA-A),* 67(2) :207-221, 2001) ; « The Colour Image Processing Handbook » de S.J. Sangwine et R.N.E. Horne *(Chapman & Hall,* 1998); « Image numérique couleur : de l'acquisition au traitement » de A. Trémeau et al. *(Dunod,* 2004).

Le Demandeur a notamment utilisé avec succès la technique de segmentation mise en oeuvre par l'algorithme de Brun (voir « Segmentation d'images couleur à base Topologique » de Luc Brun, thèse *de l'Université de Bordeaux,* 1996). Cette segmentation est peu complexe et a de bonnes performances.

La méthode de Brun est une méthode de quantification couleur qui consiste à réduire, dans un espace couleur donné, le nombre de couleurs de l'image en veillant à minimiser les distorsions couleur de l'image.

En référence à la figure 2, sa mise en oeuvre y est schématisée par les opérations 32, 33 et 34.

Dans une première opération 32, l'image est réduite à un nombre *C*_{*1*} de classes couleur au moyen d'un premier seuillage. Dans notre exemple précédemment étudié : *C*_{*1*} = 3, les couleurs étant identifiées par le fond, le vert et le magenta. La teinte de ces *C*_{*1*} classes est alors calculée et leurs valeurs mémorisées.

Lors d'une deuxième opération 33, le nombre de classes de couleur est maintenant choisi supérieur à *C*_{*1*}*,* et égal à un nombre *C*_{*2*}*.* On pourra ainsi choisir *C*_{*2*} = 8. Un deuxième seuillage est alors effectué et un nouveau calcul des teintes est fait. On gère ainsi les éventuelles classes supplémentaires et les nuances des couleurs principales.

Lors d'une troisième opération 34, une fusion de ces *C*_{*2*} classes en *C*_{*1*} classes est réalisée. A cet effet, une comparaison des teintes de ces *C*_{*2*} classes avec les teintes des *C*_{*1*} classes mémorisées est d'abord mise en oeuvre, suivie d'une association de chacune de ces *C*_{*2*} classes à une des *C*_{*1*} classes selon un critère de différence minimale de la teinte (tel que le critère de l'erreur quadratique minimale à chaque classe). Les *C*_{*2*} couleurs de l'image sont donc ainsi fusionnées pour donner une image à *C*_{*1*} couleurs. Cette image à *C*_{*1*} couleurs prend ainsi en compte des nuances de couleur par le biais d'un découpage préalable en un nombre de couleurs supérieur.

Cette méthode permet ainsi, notamment, de s'affranchir des facteurs un peu aléatoires existant entre les différentes biopsies (discutés plus haut), facteurs entraînant alors des variations de couleur entre les différentes biopsies.

Ainsi, pour des qualités de segmentation similaires, la Demanderesse préconise plutôt d'utiliser un espace couleur fiable et nécessitant un moindre coût de calculs pour les conversions, et des méthodes de segmentation efficaces et de faible complexité, tels que ledit espace couleur *H*_{*1*}*H*_{*2*}*H*_{*3*} et ladite méthode de segmentation de Brun.

Dans un cas particulier selon l'invention, l'image obtenue après la mise en oeuvre de l'opération 31 (de masquage du fond de l'image), ne contient pas assez de nuances de couleur (problème de coloration). Par exemple, on peut obtenir une image « rosée ». Dans ce cas, le procédé selon l'invention peut comprendre une variante consistant à proposer, via une interface logicielle, à l'utilisateur de choisir les classes couleur de façon interactive. Ainsi, l'utilisateur permettra d'« aider » l'exécution du programme informatique incluant le code mettant en oeuvre le procédé de segmentation.

Une fois que les couleurs sont déterminées par pixel, au moyen de la segmentation, une dernière opération 35 de masquage des pixels ayant une couleur autre que celle associée à la fibrose, est mise en oeuvre. Dans notre exemple, seuls les pixels verts sont alors retenus.

En référence à la figure 4e, est représentée l'image finalement obtenue après la mise en oeuvre de l'étape 30 de masquage des couleurs. On obtient alors une image ne contenant plus que les régions 160 de la biopsie 100 ayant des pixels verts, ces régions 160 incluant les fibroses.

Des régions 160 contenant les fibroses sont donc ainsi isolées du reste de la biopsie 100.

Cependant, si le choix d'un produit de colorisation, d'un espace couleur et d'une méthode de segmentation judicieux a permis d'atteindre ce résultat, des artéfacts, en plus des fibroses, peuvent se retrouver dans ces régions 160.

Par exemple, en plus de la fibrose interstitielle, le trichrome de Masson colore en vert les capsules, les membranes basales et les glomérules, dans une biopsie rénale 100.

On utilisera à cet effet un masquage de régions de couleur ayant au moins une caractéristique d'image sensiblement différente des caractéristiques d'image associées aux fibroses, le masquage utilisant alors cette au moins une caractéristique d'image comme critère de masquage. On utilise alors cette au moins une caractéristique d'image pour définir le critère du masquage, ces régions de pixels à masquer étant associées à des artéfacts.

On pourra utiliser par exemple au moins un des masquages suivants :
masquage des régions de pixels de couleur ayant un nombre de pixels sur une de leurs dimensions inférieur à un nombre seuil de pixels déterminé, masquage des régions de pixels ayant une intensité de couleur plus élevée qu'une valeur seuil d'intensité déterminée, masquage des régions de pixels présentant une forme globale dont la différence avec une forme de référence déterminée est inférieure à une différence de forme déterminée.

En reliant ainsi des caractéristiques d'image à des éléments organiques particuliers, on peut réussir à différencier la fibrose des artéfacts.

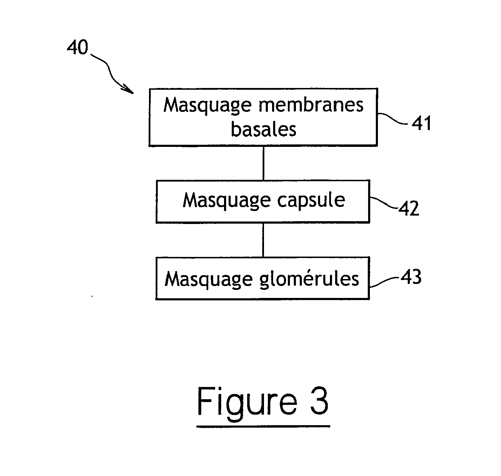

Selon un premier exemple 41, en référence à la figure 3, un masquage des régions de pixels de couleur ayant un nombre de pixels sur une de leurs dimensions inférieur à un nombre seuil de pixels déterminé peut permettre d'enlever l'artéfact « membranes basales tubulaires » dans un greffon rénal, lorsqu'on choisit un nombre seuil de pixels adapté à la situation. Ainsi, par exemple, ce nombre seuil de pixels peut être de cinq pour supprimer les membranes basales tubulaires de l'image d'une biopsie rénale 100 grossie quatre fois.

En effet, les membranes basales sont très fines en épaisseur et peuvent ainsi être supprimées.

On obtient alors l'image représentée sur la figure 4f, avec des régions 161 sans membranes basales tubulaires. On voit, en comparant cette image avec celle de la figure 4e, que, suite au masquage, toutes les parties fines attribuées à des membranes basales, ont disparu.

Selon un deuxième exemple 42, en référence à la figure 3, un masquage des pixels ayant une intensité de couleur plus élevée qu'une valeur seuil d'intensité déterminée peut permettre notamment la suppression de l'artéfact « capsules ».

Mais pour masquer l'artéfact « capsules », sera préférée la mise en oeuvre d'un masquage des pixels de couleur ayant une intensité de couleur plus élevée qu'une valeur seuil d'intensité déterminée et se trouvant en périphérie de l'ensemble des pixels de couleur de l'image.

En effet, les capsules se trouvent le plus souvent en bout de biopsie et sont d'une intensité plus forte (i.e. d'un vert plus intense dans le cas d'une coloration au trichrome de Masson).

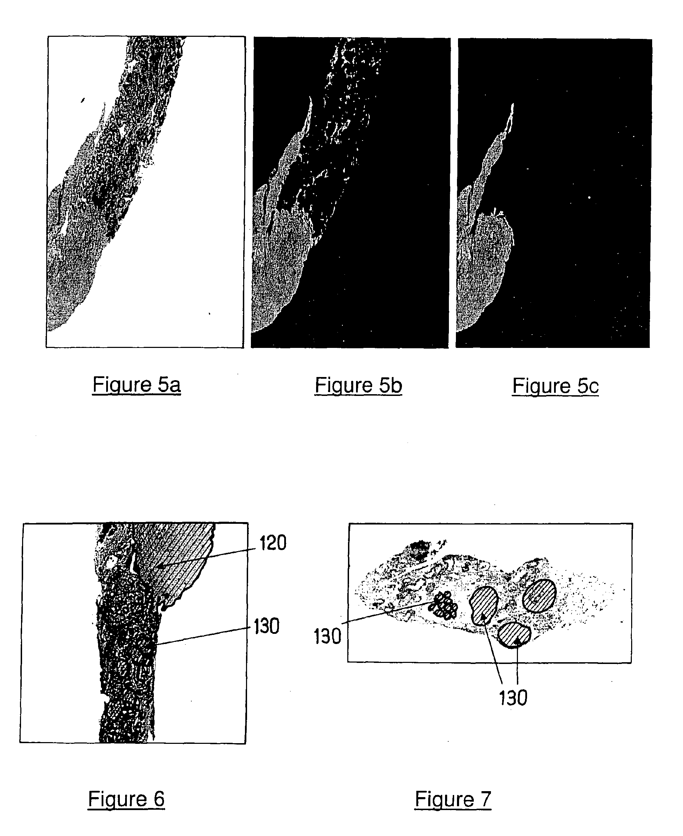

En référence aux figures 5a, 5b et 5c, est représenté une autre biopsie rénale colorée au trichrome de Masson en image normale (figure 5a), en image après masque de couleur (figure 5b) et en image après masquage des capsules (figure 5c). En comparant les figures 5b et 5c, on voit alors bien que les capsules se trouvaient en bout de biopsie (et étaient d'un vert intense), et que l'étape de masquage selon l'invention a très bien fonctionné.

En référence à la figure 6, la région 120 représente une grosse capsule, effectivement en bout de biopsie et d'un vert intense.

Selon un troisième exemple 43, en référence à la figure 3, un masquage des régions de couleur présentant une forme dont la différence avec une forme de référence déterminée est inférieure à une différence de forme déterminée.

Dans le cas où la forme de référence déterminée est une forme elliptique, ou éventuellement ovale ou circulaire, on peut assimiler une forme (sur l'image) s'en approchant à un glomérule, permettant ainsi la suppression de l'artéfact « glomérules » après masquage.

Mais pour masquer l'artéfact « glomérules », sera préférée la mise en oeuvre d'un masquage des pixels de couleur ayant une intensité de couleur plus élevée qu'une valeur seuil d'intensité déterminée et appartenant à des régions de couleur présentant une forme dont la différence avec une forme de référence déterminée est inférieure à une différence de forme déterminée, la forme de référence étant une forme elliptique, ou éventuellement ovale ou circulaire.

En référence aux figures 6 et 7, représentant deux greffons rénaux colorés au trichrome de Masson en image normale, on peut visualiser les régions 130 assimilées à des glomérules. En référence à la figure 7, on peut distinguer deux types de glomérules : des glomérules volumineux 130 en pain à cacheter, de forme ronde et d'un vert intense (à droite de l'image), et des plus petits glomérules 130 (à gauche) qui peuvent être reconnus par la forme des lumières à l'aide de la reconnaissance de formes elliptiques.

Les trois exemples 41, 42 et 43 de masquage d'artéfacts selon l'invention peuvent être mis en oeuvre indépendamment ou l'un à la suite de l'autre (tel que représenté sur la figure 3). Par exemple on pourra mettre en oeuvre le deuxième exemple 42 et le troisième exemple 43 pour enlever la capsule 120 et les glomérules 130 de la biopsie 100 montrée sur la figure 6.

D'autres artéfacts que les membranes basales, les capsules et les glomérules, peuvent être enlevés de l'image par masquage, si tant est que l'une de leurs caractéristiques d'image se distinguent suffisamment des caractéristiques d'image des fibroses.

L'image finale obtenue donne les parties de la biopsie représentées uniquement par les fibroses.

Le procédé selon l'invention peut comprendre en outre la mise en oeuvre d'un calcul donnant la proportion de cette fibrose observée dans la biopsie. On pourra à cet effet d'abord calculer l'aire de la fibrose à partir de l'image finalement obtenue, puis diviser cette aire par l'aire précédemment calculée de l'ensemble de la biopsie (dont le calcul a été présenté plus haut en référence à la figure 4c). L'aire peut se mesurer selon une unité mesure (telle le mm) ou selon un nombre de pixels.

On peut ainsi obtenir un index de la fibrose dans une biopsie, comme par exemple un index de la fibrose interstitielle dans un greffon rénal. En particulier, une observation de biopsies colorées prélevées à différents temps permet d'évaluer l'augmentation de la fibrose.

Dans le cas d'une analyse d'un tissu rénal prélevé sur un rein transplanté, la mise en oeuvre du procédé selon l'invention fournira alors des données sur les fibroses interstitielles pouvant ensuite être interprétées pour diagnostiquer une néphropathie chronique de l'allogreffe (CAN) de manière précoce, avant l'apparition des symptômes cliniques.

Ainsi, quatre groupes de biopsies rénales ont été estimés par un expert anatomopathologiste :
- de reins normaux
- de greffons normaux, inférieure à 10%
- de greffons avec fibrose interstitielle estimée entre 20 et 40%
- de greffons avec fibrose interstitielle de plus de 50%

Le tableau ci-dessous donne dans la colonne de gauche l'évaluation faite par les anatomopathologistes (à partir d'une image qu'ils ont lue directement en sortie de microscope) en pourcentage approximatif d'envahissement du parenchyme rénal par la fibrose, et dans la colonne de droite la quantification de la surface exacte de fibrose faite par l'analyse d'image selon l'invention.

| **Anathomopathologiste expert** | **Analyse d'image quantitative** |
|---|---|
| Reins normaux | 3,7+/-2,2 % |
| Reins transplantés normaux <10% | 15,2 +/- 3 % |
| Reins transplantés 20 à 40 % | 28,8 +/- 4 % |
| Reins transplantés >50% | 49,2% +/- 11,5 % |

Le pourcentage de la fibrose interstitielle par rapport à la surface de biopsie est donc une bonne mesure, puisque :
- les résultats sont en corrélation avec ceux des experts ;
- le procédé utilisé selon l'invention est robuste par rapport à une variation des paramètres d'acquisition (donnant des gammes d'index de fibrose, et non un index précis) ;
- l'analyse par segmentation d'image permet de mesurer la surface de fibrose du rein transplanté de manière reproductible, fiable et quantitative.

On pourra aussi réaliser cette analyse d'image sur un tissu prélevé sur un foie, la mise en oeuvre du procédé selon l'invention fournira alors des données sur les fibroses hépatiques pouvant ensuite être interprétées pour par exemple diagnostiquer une hépatite, telle qu'une hépatite B, au niveau histologique et même cytologique.

On pourra aussi réaliser cette analyse d'image sur un tissu prélevé sur un poumon pour le diagnostic de maladies respiratoires telles que la bronchite ou pour analyser le développement des fibroses pulmonaires.

Une méthode de quantification, dans des tissus organiques, de fibrose peut en outre trouver des applications dans les médicaments anti-fibrosants, anti-viraux, immunosuppresseurs.

Il est à noter que l'invention se rapporte à l'analyse d'une image d'une biopsie, mais aussi à tout type de tissu organique pouvant être analysé selon l'invention.

Le produit histochimique colorisant n'est pas non plus limité au trichrome de Masson, mais à tout autre type de produit apte à révéler d'une couleur spécifique les éléments du tissu incluant des fibroses, tel que du rouge Sirius.

On notera ici que l'homme du métier saura aisément écrire les programmes d'ordinateur comprenant des lignes de codes pour mettre en oeuvre les différentes étapes d'un procédé selon l'invention (i.e. les différents algorithmes) décrites et citées ici dans des systèmes de traitement de données conventionnels interfaces de façon tout aussi conventionnelle avec les moyens d'acquisition de l'image.

Un exemple de codes de programme d'ordinateur mettant en oeuvre l'invention a fait l'objet par ailleurs d'une protection sous le régime du droit d'auteur.

## Revendications

1. Procédé de traitement d'image permettant d'identifier des fibroses dans un tissu organique, à partir d'une image du tissu, le tissu ayant été préalablement coloré, **caractérisé en ce qu'**il comprend les étapes suivantes :
(a) masquage dans l'image des couleurs autres que la couleur associée aux fibroses ;
(b) masquage de régions de couleur associées à des artéfacts et ayant au moins une caractéristique d'image sensiblement différente des caractéristiques d'image associées aux fibroses, le masquage utilisant alors cette au moins une caractéristique d'image comme critère de masquage.

2. Procédé de traitement d'image selon la revendication précédente, **caractérisé en ce que** l'étape (b) met en oeuvre au moins une des masquages suivants : masquage des régions de couleur ayant une de leurs dimensions inférieure à une dimension seuil déterminée, masquage des régions ayant une intensité de couleur plus élevée qu'une valeur seuil d'intensité déterminée, masquage des régions présentant une forme globale dont la différence avec une forme de référence déterminée est inférieure à une différence de forme déterminée.

3. Procédé de traitement d'image selon l'une des revendications précédentes, **caractérisé en ce que** l'étape (b) comprend un masquage des régions de couleur ayant une de leurs dimensions inférieure à une dimension seuil déterminée.

4. Procédé de traitement d'image selon la revendication précédente, **caractérisé en ce que** la dimension seuil déterminée est de cinq pixels, pour supprimer les membranes basales tubulaires de l'image d'un tissu rénal grossi quatre fois au microscope.

5. Procédé de traitement d'image selon l'une des deux revendications précédentes, **caractérisé en ce que** l'étape (b) permet notamment la suppression des artéfacts « membranes basales tubulaires ».

6. Procédé de traitement d'image médicale selon l'une des revendications précédentes, **caractérisé en ce que** l'étape (b) comprend un masquage des régions de couleur ayant une intensité de couleur plus élevée qu'une valeur seuil d'intensité déterminée.

7. Procédé de traitement d'image selon l'une des revendications 1 à 5, **caractérisé en ce que** l'étape (b) comprend un masquage des régions de couleur ayant une intensité de couleur plus élevée qu'une valeur seuil d'intensité déterminée et se trouvant en périphérie de l'ensemble couleur de l'image.

8. Procédé de traitement d'image selon l'une des deux revendications précédentes, **caractérisé en ce que** l'étape (b) permet notamment la suppression de l'artéfact « capsules ».

9. Procédé de traitement d'image selon l'une des revendications précédentes, **caractérisé en ce que** l'étape (b) comprend un masquage des régions de couleur présentant une forme dont la différence avec une forme de référence déterminée est inférieure à une différence de forme déterminée.

10. Procédé de traitement d'image selon l'une des revendications 1 à 8 **caractérisé en ce que** l'étape (b) comprend un masquage des régions de couleur ayant une intensité de couleur plus élevée qu'une valeur seuil d'intensité déterminée et appartenant à des régions de couleur présentant une forme dont la différence avec une forme de référence déterminée est inférieure à une différence de forme déterminée.

11. Procédé de traitement d'image selon l'une des deux revendications précédentes, **caractérisé en ce que** ladite forme de référence déterminée est une forme elliptique, ovale, ou circulaire.

12. Procédé de traitement d'image selon l'une des trois revendications précédentes, **caractérisé en ce que** l'étape (b) permet notamment la suppression des artéfacts « glomérules ».

13. Procédé de traitement d'image selon l'une des revendications précédentes, **caractérisé en ce qu'**il comprend en outre, antérieurement à l'étape (a), une étape de masquage du fond de l'image mise en oeuvre au moyen d'un seuillage d'intensité lumineuse.

14. Procédé de traitement d'image selon l'une des revendications précédentes, **caractérisé en ce que** le masquage couleur de l'étape (a) est réalisé à partir d'un espace couleur à N dimensions (N>1 ).

15. Procédé de traitement d'image selon la revendication précédente, **caractérisé en ce que** l'espace couleur est un espace couleur qui tient compte de la manière dont l'information couleur est transmise au cerveau humain.

16. Procédé de traitement d'image selon la revendication précédente, **caractérisé en ce que** N = 3, et **en ce que** l'espace couleur est de type *« H*_{*1*}*H*_{*2*}*H*_{*3*}*»* (où H₁=Rouge - Vert ; H₂=2*Bleu - Rouge - Vert ; H₃=(Rouge + Vert + Bleu)/2).

17. Procédé de traitement d'image selon l'une des trois revendications précédentes, **caractérisé en ce que** l'étape (a) comprend une segmentation de l'image en régions de couleurs.

18. Procédé de traitement d'image selon la revendication précédente, **caractérisé en ce que** la segmentation comprend un seuillage en un nombre *C*_{*1*} de classes de couleur et un calcul de la teinte de chacune de ces classes, l'image étant alors réduite en *C*_{*1*} classes de couleur.

19. Procédé de traitement d'image selon la revendication 17, **caractérisé en ce que** la segmentation de couleurs comprend :
- un premier seuillage en un nombre *C*_{*1*} de classes de couleur ;
- un calcul de la teinte de chacune de ces *C*_{*1*} classes;
- une mémorisation de ces teintes ;
- un deuxième seuillage en un nombre *C*_{*2*} de classes de couleur, *C*_{*2*} étant supérieur à *C*_{*1*} ;
- un calcul de la teinte de chacune de ces *C*_{*2*} classes ;
- une comparaison des teintes de ces *C*_{*2*} classes avec les teintes des *C*_{*1*} classes mémorisées ;
- une association de chacune de ces *C*_{*2*} classes à une des *C*_{*1*} classes selon un critère de différence minimale de la teinte.

20. Procédé de traitement d'image selon la revendication 17, **caractérisé en ce que** la segmentation de couleurs utilise un algorithme de Brun, donné dans « Segmentation d'images couleur à base Topologique » de Luc Brun, *(thèse de l'Université de Bordeaux,* 1996).

21. Procédé de traitement d'image selon l'une des trois revendications précédentes, **caractérisé en ce que** *C*_{*1*} = 3.

22. Procédé de traitement d'image selon l'une des revendications 18 à 21, **caractérisé en ce que** c'est l'utilisateur qui choisit les classes de couleur par l'intermédiaire d'une interface.

23. Procédé de traitement d'image selon l'une des revendications 18 à 21, **caractérisé en ce que** le choix des classes de couleur se fait automatiquement.

24. Procédé de traitement d'image selon l'une des revendications précédentes, **caractérisé en ce qu'**il comprend en outre, postérieurement à l'étape (b), la mise en oeuvre d'un calcul donnant la proportion de fibrose dans le tissu.

25. Programme d'ordinateur comprenant des lignes de codes aptes à mettre en oeuvre le procédé de traitement d'image selon l'une des revendications 1 à 24 lorsque ledit programme est exécuté par un système informatique.

26. Programme d'ordinateur selon la revendication précédente mis en oeuvre sur un support lisible par un système informatique.

27. Support d'informations, totalement ou partiellement amovible, lisible par un système informatique, **caractérisé en ce qu'**il stocke des instructions d'un programme d'ordinateur aptes à mettre en oeuvre le procédé de traitement d'image selon l'une des revendications 1 à 24.

28. Procédé d'imagerie médicale, **caractérisé en ce qu'**il comprend les étapes suivantes :
- coloration d'un tissu organique qui a été prélevé ;
- acquisition de l'image du tissu ;
- traitement d'image mis en oeuvre conformément au procédé de traitement d'image selon l'une des revendications 1 à 24.

29. Procédé d'imagerie médicale selon la revendication précédente, **caractérisé en ce que** la coloration se fait au moyen de trichrome de Masson.

30. Procédé d'imagerie médicale selon la revendication précédente, **caractérisé en ce que** la couleur associée aux fibroses est alors le vert, et **en ce que** la couleur associée aux autres éléments du tissu que fibroses, membranes basales, capsules, et glomérules est le magenta, avec éventuellement du bleu.

31. Procédé d'imagerie médicale selon l'une des trois revendications précédentes, **caractérisé en ce que** l'acquisition de l'image est réalisée au moyen d'un microscope et d'un détecteur de type « CCD » placé en aval du microscope pour en détecter l'image.

32. Procédé d'imagerie médicale selon l'une des revendications précédentes, **caractérisé en ce que** le tissu organique est un tissu rénal, hépatique, ou pulmonaire.

33. Procédé d'imagerie médicale selon la revendication précédente, **caractérisé en ce que** la fibrose à identifier est une fibrose interstitielle rénale, une fibrose hépatique ou une fibrose interstitielle pulmonaire.

34. Système d'imagerie médicale, **caractérisé en ce qu'**il comprend :
- des moyens pour colorer histochimiquement un tissu organique;
- des moyens pour acquérir l'image du tissu ;
- un système informatique pour exécuter un programme d'ordinateur comportant des lignes de codes aptes à mettre en oeuvre un procédé de traitement d'image selon l'une des revendications 1 à 24.

35. Système selon la revendication précédente, **caractérisé en ce que** les moyens pour acquérir l'image du tissu comprennent un support sur lequel est disposé le tissu organique coloré, un microscope apte à grossir l'image du tissu organique ainsi disposé, et un détecteur CCD placé en aval du microscope de sorte à numériser l'image disponible en sortie du microscope pour le traitement d'image ultérieur.

36. Utilisation des données sur la fibrose fournies en sortie du procédé de traitement d'image selon l'une des revendications 1 à 24 ou du procédé d'imagerie médicale selon l'une des revendications 28 à 33, pour un diagnostic médical.

37. Utilisation selon la revendication précédente, **caractérisé en ce que** le diagnostic médical est un diagnostic pré-clinique d'altérations fonctionnelles au niveau des tissus et des organes.

38. Utilisation selon la revendication précédente, **caractérisé en ce que** les altérations fonctionnelles diagnostiquées sont choisies dans le groupe constitué par la néphropathie chronique de l'allogreffe (CAN), l'hépatite et des maladies respiratoires.
